# EUROPÄISCHE PATENTSCHRIFT

(11) **EP 1 826 160 B1**
(45) Veröffentlichungstag und Bekanntmachung des Hinweises auf die Patenterteilung: **20.08.2008**
(21) Anmeldenummer: 07001686.0
(22) Anmeldetag: 26.01.2007
(51) Int. Cl.: B65G 47/91, B25J 15/06, B65H 3/08, B66C 1/02, F16B 47/00

(54) **Sauggreifer**
Suction gripper
Pince aspirante

(30) Priorität: 06.02.2006 DE 102006005872
(43) Veröffentlichungstag der Anmeldung: 29.08.2007
(73) Patentinhaber: J. Schmalz GmbH, 72293 Glatten (DE)
(72) Erfinder: Schaaf, Walter, Dr., 72250 Freudenstadt-Grüntal (DE); Moll, Volker, 72290 Lossburg-Wittendorf (DE); Stahl, Tobias, 72280 Dornstetten (DE)
(74) Vertreter: Steimle, Josef

(56) Entgegenhaltungen:
- DE-A1- 4 128 659
- DE-A1- 10 140 248

## Beschreibung

Die Erfindung betrifft einen Sauggreifer zum Ansaugen von Werkstücken, mit einem Unterdruckanschluss, einem elastischen Saugkörper und einem Saugkörperhalter, wobei der Saugkörper an seiner dem Werkstück zugewandten Seite eine einen Saugraum abgrenzende Dichtlippe aufweist und der Saugraum mit dem Unterdruckanschluss strömungsverbunden ist; und wobei der Sauggreifer den Verschleißzustand erfassende oder anzeigende Mittel aufweist, die ein sich bei der Benutzung des Sauggreifers verschleißendes Element aufweisen, das einem Abrieb unterworfen und im Bereich der Dichtlippe angeordnet ist.

Sauggreifer werden verwendet, um Gegenstände oder Werkstücke anzusaugen, sodass sie entweder auf diese Weise fixiert und/oder gehandhabt werden können. Befinden sich die Sauggreifer an Manipulatoren, so kann der angesaugte Gegenstand transportiert werden. Wichtig hierfür ist, dass der Gegenstand korrekt angesaugt wird und im Saugraum ein ausreichend hoher Unterdruck herrscht, sodass der Gegenstand mit Sicherheit festgehalten wird. Zur Ermittlung des Unterdrucks werden Unterdrucksensoren verwendet, die in der Unterdruckleitung zum Sauggreifer vorgesehen sind und die den ermittelten Wert an eine Maschinensteuerung weitergeben, sodass diese bei Erreichen des gewünschten Unterdrucks die Unterdruckquelle abschaltet oder die Unterdruckleitung absperrt. Wird der Unterdruck nicht erreicht, dann kann die Ursache hierfür ein schadhafter oder abgenützter Sauggreifer sein, der ersetzt werden muss.

Aus der DE 1 963 250 A1 ist ein Vakuumsaugteller zum Anheben und Fördern von Fördergut bekannt, der über mehrere Dichtlippen am Fördergut anliegt. Die DE 42 29 208 A1 offenbart eine Vorrichtung zum Anheben und Transportieren von Lasten, die eine Alarmeinrichtung aufweist, die dann ein Alarmsignal abgibt, wenn durch einen unzulässig hohe Leckströmung der Unterdruck unter der Saugplatte allmählich abnimmt. Weitere Varianten von Sauggreifern sind aus der DE 198 17 216 C2 und der DE 198 17 323 A1 bekannt.

Die DE 41 28 659 A1 offenbart einen Sauggreifer mit Farbmarkierungen zur Fertstellung von Verschleiss oder Abrasion des Saugmantels.

Der Erfindung liegt daher die Aufgabe zugrunde, einen Sauggreifer der eingangs genannten Art derart auszugestalten, dass er einerseits preiswert ist, dass andererseits aber auch sofort erkennbar ist, ob er noch vollständig funktionsfähig ist.

Diese Aufgabe wird mit einem Sauggreifer gelöst, der die Merkmale des Anspruchs 1 aufweist.

Beim erfindungsgemäßen Sauggreifer wird nicht erst dann festgestellt, dass dieser, insbesondere der Saugkörper, schadhaft ist, wenn ein Unterdruck nicht mehr erreicht werden kann, weil zum Beispiel die Dichtlippe den Saugraum nicht mehr dicht abschließt oder weil der Saugkörper porös geworden ist. Das Erreichen der Verschleißgrenze wird schon früher festgestellt, da der Sauggreifer Mittel aufweist, die dessen Verschleißzustand anzeigen. Somit können frühzeitig Maßnahmen ergriffen werden, so dass einem Ausfall des Sauggreifers zuvorgekommen werden kann, ohne dass es zu Fehlfunktionen beim Ansaugen des Werkstücks kommt, indem zum Beispiel der Unterdruck nicht mehr aufgebracht werden kann. Insbesondere im Hinblick auf die Aufrechterhaltung der Sicherheit in Produktionsanlagen ist die Anzeige des Verschleißzustandes von sich abnutzenden Sauggreifern von besonderem Vorteil.

Dabei weisen die Mittel ein sich bei der Benutzung des Sauggreifers abnutzendes oder verschleißendes Element auf. An diesem verschleißenden Element oder über dieses verschleißende Element wird die Möglichkeit geschaffen, den Verschleißzustand zu erkennen beziehungsweise anzuzeigen. Dabei wird dieses verschleißende Element zum Beispiel einem Abrieb unterworfen, wobei das Element vorteilhaft im Bereich der Dichtlippe, das heißt in dem Bereich, der am anzusaugenden Werkstück angreift beziehungsweise an diesem anliegt, angeordnet ist.

Bei einem Ausführungsbeispiel weist der Saugkörper zumindest abschnittsweise ein Element auf, dessen Farbe sich im Laufe der Zeit, oder mit der Anzahl von Wechselbeanspruchungen oder durch Anlegen eines Unterdrucks, ändert. Über diese Farbänderung kann angezeigt werden, welchen Zustand und insbesondere welchen Verschleißzustand der Sauggreifer besitzt. Es kann zum Beispiel das Alter des Sauggreifers angezeigt werden oder ob der Sauggreifer häufig oder selten benutzt wurde oder ob am Sauggreifer der gewünschte Unterdruck anliegt und somit die gewünschte Ansaugkraft erreichbar ist oder nicht.

Bei einem weiteren Ausführungsbeispiel ist im Sauggreifer und insbesondere im Saugkörper ein RFID-Element integriert oder ein Vakuumsensor vorgesehen, der mit dem Saugraum strömungsverbunden ist. Auf diese Weise können Daten gespeichert und/oder erzeugt werden, die abrufbar sind, anhand denen zum Beispiel das Produktionsdatum des Sauggreifers oder der erreichte Unterdruck bestimmbar sind.

Weitere Vorteile, Merkmale und Einzelheiten der Erfindung ergeben sich aus den Unteransprüchen sowie der nachfolgenden Beschreibung unter Bezugnahme auf die Zeichnung.

In der Zeichnung zeigen:
- Figur 1: einen Querschnitt durch einen Sauggreifer;
- Figur 2: eine schematische Wiedergabe eines Sauggreifers mit einem elektrisch leitenden Einsatz;
- Figur 3: eine schematische Darstellung eines Sauggreifers mit einem farbigen Überzug;
- Figur 4: eine schematische Darstellung eines Sauggreifers mit einem Material, dessen Farbe sich ändert;
- Figur 5: eine schematische Darstellung eines Sauggreifers mit Verschleißelementen mit unterschiedlichen Höhen;
- Figur 6: eine schematische Darstellung eines Sauggreifers, dessen Farbe sich bei einem bestimmten Unterdruck ändert;
- Figur 7: eine schematische Darstellung eines Sauggreifers mit einem elektrisch leitenden Einsatz, der bei einer bestimmten Anzahl von Lastwechseln versagt;
- Figur 8: eine schematische Darstellung eines Sauggreifers mit einem Kanal und einem im Kanal angeordneten Schwimmer;
- Figur 9: eine schematische Darstellung eines Sauggreifers mit einem Kanal und einem am Kanal angeordneten Anzeigeelement;
- Figur 10: eine schematische Darstellung eines Sauggreifers mit einer abtragbaren elektrisch leitenden Elastomerschicht;
- Figur 11: eine schematische Darstellung eines Sauggreifers mit am Dichtlippenrand vorgesehenen Höhenmarkierungen;
- Figur 12: eine schematische Darstellung eines Sauggreifers mit integriertem Näherungsschalter oder einer Lichtschranke;
- Figur 13: eine schematische Darstellung eines Sauggreifers mit integriertem RFID-Element; und
- Figur 14: eine schematische Darstellung eines Sauggreifers mit integriertem Vakuumsensor.

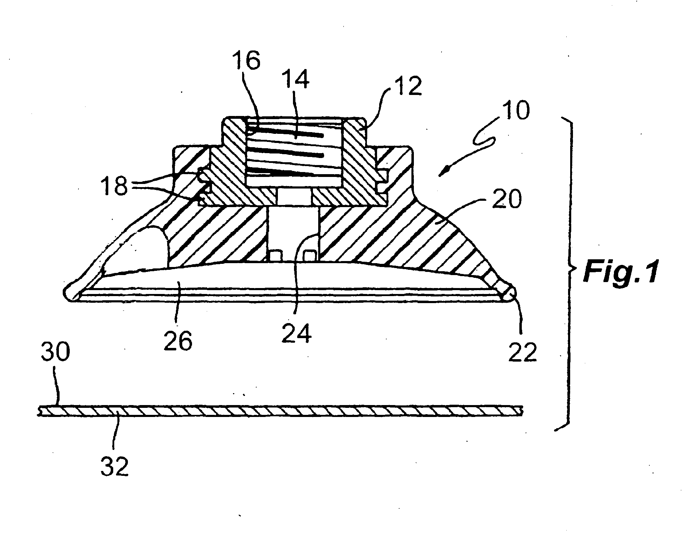

In der Figur 1, die einen Querschnitt durch einen insgesamt mit 10 bezeichneten Sauggreifer zeigt, ist mit dem Bezugszeichen 12 ein Saugkörperhalter bezeichnet. Dieser weist einen Unterdruckanschluss 14 auf, der zum Beispiel mit einem Innengewinde 16 versehen ist. Die Außenseite des Saugkörperhalters 12 ist mit zwei Umfangswülsten 18 versehen, an welchen ein elastischer Saugkörper 20 sicher fixiert ist. Dieser Saugkörper 20 ist in etwa glockenförmig ausgebildet und weist einen umlaufenden unteren Rand auf, der als Dichtlippe 22 ausgebildet ist. Außerdem weist der Saugkörper 20 einen zentralen Durchbruch 24 auf, der mit dem Unterdruckanschluss 14 kommuniziert. Der Durchbruch 24 mündet in einen Saugraum 26, der von der Dichtlippe 22 umgeben ist, die auf die Oberfläche 30 eines Werkstücks 32 aufgesetzt wird.

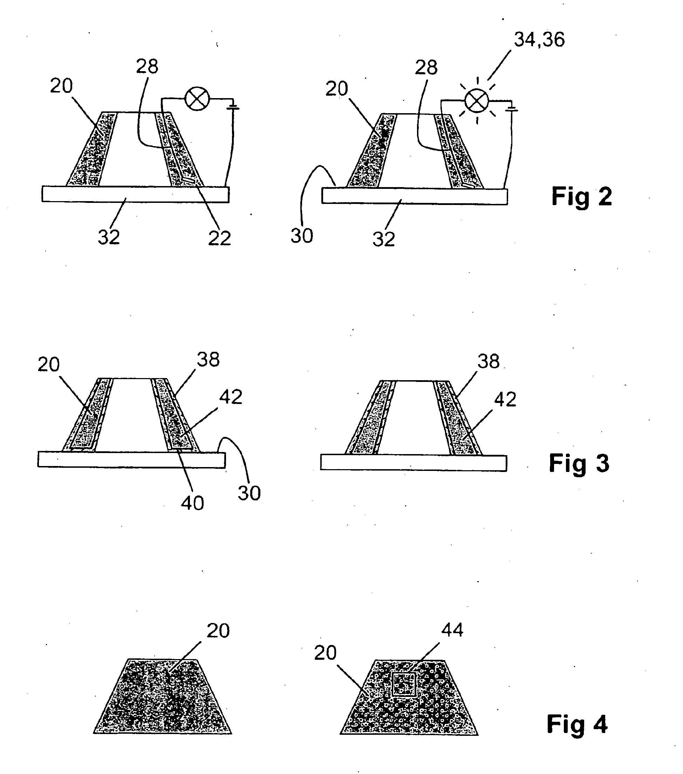

In den Figuren 2 bis 12 ist jeweils rechts der verschlissene Zustand des Sauggreifers 10 dargestellt.

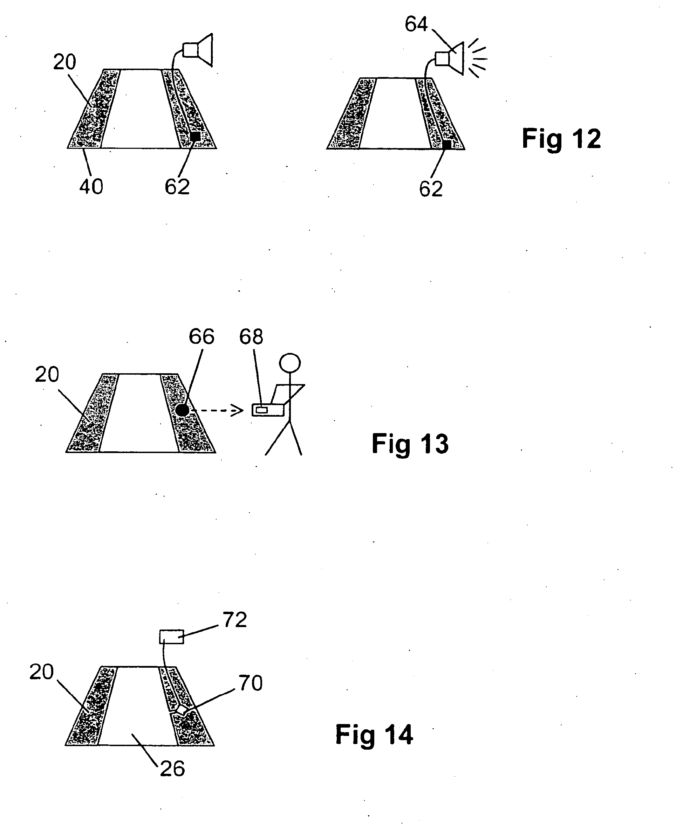

In der Figur 2 ist in den Saugkörper 20 ein leitender Gegenstand 28, zum Beispiel ein Metallnetz oder ein metallischer Faden, eingegossen. Dabei endet dieser Gegenstand 28 im Bereich der Dichtlippe 22, welche auf das Werkstück 32 aufgesetzt wird. Verschleißt die Dichtlippe 22, so wird das freie Ende des Gegenstands 28 freigesetzt und berührt die Oberfläche 30 des Werkstücks 32 und es kann ein elektrischer Kontakt zum Werkstück 32 hergestellt werden, der einen Signalgeber 34, zum Beispiel eine Lampe 36, aktiviert. Auf diese Weise kann die Verschleißgrenze des Sauggreifers 10 angezeigt werden. wenn das freie Ende des Gegenstands 28 diese Grenze definiert. Andere Anzeigen, wie Lautsprecher 64 (Figur 12) sind denkbar.

In der Figur 3 weist der Saugkörper 20 einen farbigen Überzug 38 auf, der im Bereich der Dichtlippe 22, die als verschleißendes Element 40 ausgebildet ist und die auf der Oberfläche 30 des Werkstücks 32 aufsitzt, allmählich abgetragen wird. Ist der Überzug 38 auf der aufsitzenden Stelle vollständig abgetragen, dann ist das unter dem Überzug 38 liegende Material 42 erkennbar, welches eine andere Farbe aufweist. Auf diese Weise ist die Verschleißgrenze ebenfalls erkennbar.

Die Figur 4 zeigt ein Ausführungsbeispiel, bei welchem der Saugkörper 20 aus einem Kunststoff hergestellt ist, dessen Farbe sich ändert, wobei die Farbänderung zeitabhängig ist. Auf diese Weise kann unabhängig vom Einsatz des Sauggreifers 10 dessen Alter angezeigt werden. Es besteht auch die Möglichkeit, dass der Sauggreifer 10 beziehungsweise der Saugkörper 20 mit einem Aufkleber 44 versehen ist, dessen Farbe sich mit der Zeit ändert. Die Farbänderung kann z.B. durch Sauerstoff- oder UV-Licht-Einwirkung hervorgerufen werden.

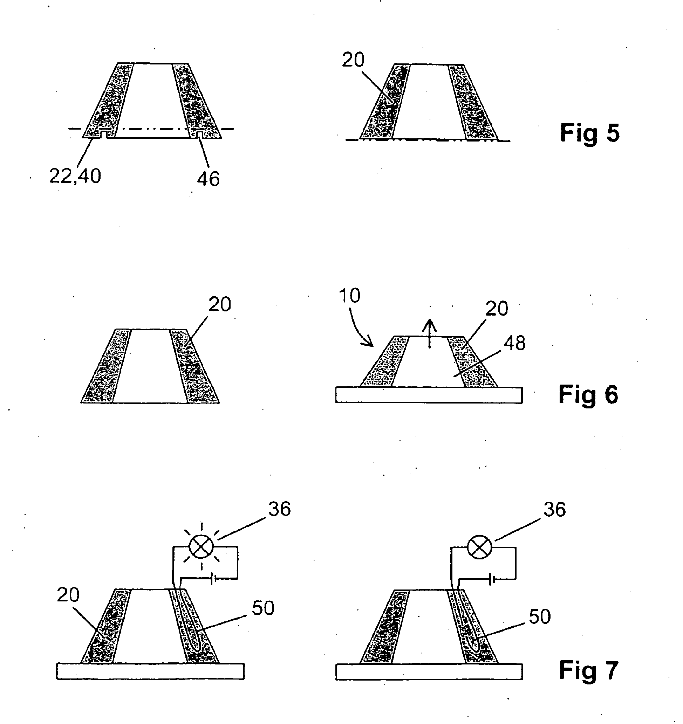

Beim Ausführungsbeispiel der Figur 5 ist die Dichtlippe 22 beziehungsweise ist das verschleißende Element 40 mit einer Nut 46 versehen, über deren Tiefe der Grad des Verschleißes ermittelbar ist. Ist die Nut 46 nicht mehr erkennbar, hat der Saugkörper 20 seine Verschleißgrenze erreicht.

In der Figur 6 besteht das Material des Saugkörpers 20 aus einem eingefärbten Kunststoff, der die Farbe bei einem bestimmten Unterdruck ändert. Erreicht der Sauggreifer 10 diesen Unterdruck nicht, dann kann von der fehlenden Farbänderung auf das Erreichen der Verschleißgrenze geschlossen werden. Mit dem Bezugszeichen 48 ist der im Sauggreifer 10 herrschende Unterdruck bezeichnet.

Beim Ausführungsbeispiel der Figur 7 ist in den elastischen Saugkörper 20 ein elektrisch leitendes Element, insbesondere ein Faden, eingegossen, der ab einer bestimmten Anzahl von Lastwechseln bricht. Der Bruch des Fadens 50 zeigt das Erreichen der Verschleißgrenze an, was visuell über die Lampe 36 dargestellt werden kann, deren Stromzufuhr unterbrochen wird.

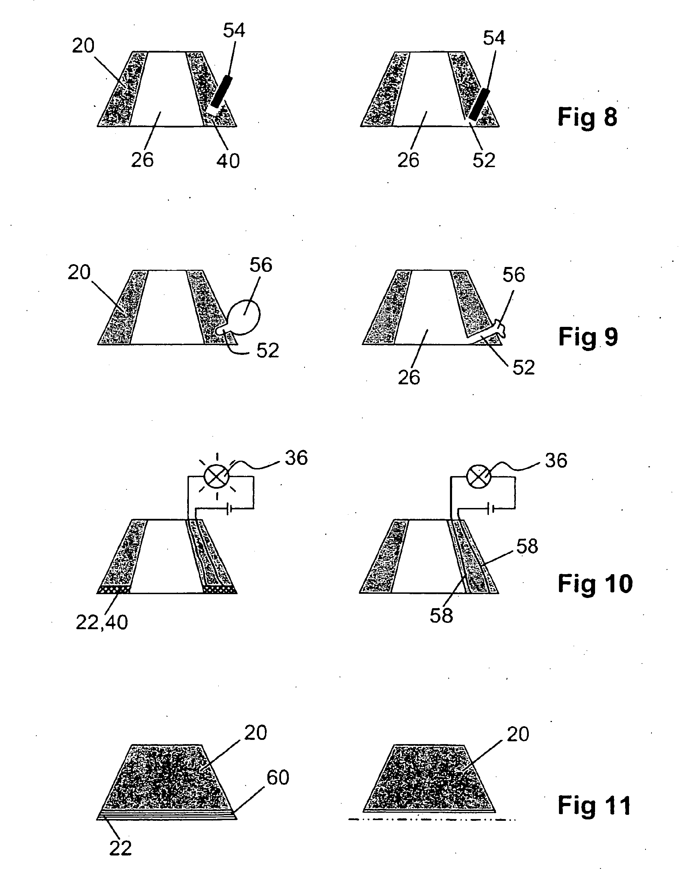

Die Figur 8 zeigt ein Ausführungsbeispiel, bei welchem der Saugkörper 20 mit einem Kanal versehen ist, der an seiner Innenseite, das heißt in Richtung des Saugraums 26 verschlossen ist. Durch Abnutzung des verschleißenden Elements 40 an der Unterseite des Saugkörpers 20 wird dieser Kanal 52 in Richtung des Saugraums 26 geöffnet, so dass der im Saugraum 26 herrschende Unterdruck einen Schwimmer 54 ansaugt. Dies kann dadurch von außen wahrgenommen werden, dass der Schwimmer 54 teilweise oder ganz im Saugkörper 20 verschwindet.

Beim Ausführungsbeispiel der Figur 9 besitzt der Saugkörper 20 ebenfalls einen nach innen zunächst verschlossenen Kanal 52, der bei Erreichen der Verschleißgrenze in Richtung des Saugraums 26 geöffnet wird. Die Außenseite des Kanals 52 endet in einer Blase 56, an welcher bei Erreichen der Verschleißgrenze der im Saugraum 26 herrschende Unterdruck angelegt wird, so dass die Blase 56 zusammenfällt. Dies ist ebenfalls von außen visuell wahrnehmbar.

Beim Ausführungsbeispiel der Figur 10 besteht das verschleißende Element 40 aus einer elektrisch leitenden Elastomerschicht und bildet zum Beispiel die oder einen teil der Dichtlippe 22. In dieses verschleißende Element 40 münden zwei Kabel 58, an welche eine Lampe 36 angeschlossen ist. Wird das verschleißende Element 40 so weit abgetragen, dass keine elektrische Verbindung mehr zwischen den beiden Kabeln 58 besteht, dann wird die Stromzufuhr zur Lampe 36 unterbrochen, was ebenfalls visuell wahrnehmbar ist.

Die Figur 11 zeigt ein Ausführungsbeispiel, bei welchem der Saugkörper 20 an seiner Außenseite im Bereich des Randes der Dichtlippe 22 Höhenmarkierungen 60 aufweist. Durch Abtrag der Dichtlippe 22 werden auch die Höhenmarkierungen 60 abgetragen. Dabei können die Höhenmarkierungen 60 in Bereiche, insbesondere in drei Bereiche, wie volle Funktionsfähigkeit (grün), Warnung (gelb), Austausch (rot) eingeteilt sein.

Die Figur 12 zeigt ein Ausführungsbeispiel, bei welchem in den Saugkörper 20 ein Näherungsschalter 62 oder eine Lichtschranke einvulkanisiert ist. Durch Abtrag des verschleißenden Elements 40 wird der Näherungsschalter 62 freigelegt und zum Beispiel über einen Lautsprecher 64 ein Alarm ausgelöst.

Die Figur 13 zeigt ein Ausführungsbeispiel, bei welchem in den Saugkörper 20 ein RFID-Element 66 eingelagert ist, welches Zustandsdaten und Produktdaten, zum Beispiel das Produktionsdatum, speichert und mittels eines Lesegeräts 68 ausgelesen werden kann. Dadurch ist von außen ermittelbar, wie alt der Sauggreifer 10 ist.

Beim Ausführungsbeispiel der Figur 14 ist in den Saugkörper 20 ein Vakuumsensor 70 integriert, welcher an den Saugraum 26 angeschlossen ist und der an eine Auswerteeinheit 72 angeschlossen ist. Wird der erforderliche Unterdruck im Saugraum 26 nicht erreicht, dann wird dieses von der Auswerteeinheit 72 festgestellt und als Verschleißgrenze definiert.

Mit dem erfindungsgemäßen Sauggreifer 10 kann auf einfache Weise die Verschleißgrenze ermittelt werden und der Sauggreifer 10 kann vor Erreichen der Verschleißgrenze ausgetauscht werden.

## Patentansprüche

1. Sauggreifer (10) zum Ansaugen von Werkstücken (32) mit einem Unterdruckanschluss (14), einem elastischen Saugkörper (20) und einem Saugkörperhalter (12), wobei der Saugkörper (20) an seiner dem Werkstück (32) zugewandten Seite eine einen Saugraum (26) abgrenzende Dichtlippe (22) aufweist und der Saugraum (26) mit dem Unterdruckanschluss (14) strömungsverbunden ist, und wobei der Sauggreifer (10) den Verschleißzustand erfassende oder anzeigende Mittel aufweist, die ein sich bei der Benutzung des Sauggreifers verschleißendes Element (40) aufweisen, das einem Abrieb unterworfen und im Bereich der Dichtlippe (22) angeordnet ist, **dadurch gekennzeichnet, dass** im Saugkörper (20) ein elektrisch leitender Gegenstand (28) vorgesehen ist, der insbesondere im Element (40) endet und durch Verschleiß des Elements (40) freigelegt oder unterbrochen wird.

2. Sauggreifer nach Anspruch 1, **dadurch gekennzeichnet, dass** an den elektrisch leitenden Gegenstand (28) ein Signalgeber angeschlossen ist.

3. Sauggreifer nach Anspruch 2, **dadurch gekennzeichnet, dass** der Signalgeber optischer Natur, z.B. eine Lampe (36) und/oder akustischer Natur, z.B. ein Lautsprecher (64) ist.

4. Sauggreifer nach einem der vorhergehenden Ansprüche, **dadurch gekennzeichnet, dass** der Gegenstand (28) bedingt elastisch verformbar ist und nach einer vorbestimmten Anzahl von Lastwechseln bricht oder versagt.

5. Sauggreifer nach einem der vorhergehenden Ansprüche, **dadurch gekennzeichnet, dass** im Saugkörper (20) ein Näherungsschalter (62) vorgesehen ist.

6. Sauggreifer nach einem der vorhergehenden Ansprüche, **dadurch gekennzeichnet, dass** im Bereich der Dichtlippe (22) Höhenmarkierungen (60) an der Außen- und/oder Innenfläche des Saugkörpers (20) vorgesehen sind.

7. Sauggreifer nach einem der vorhergehenden Ansprüche, **dadurch gekennzeichnet, dass** das verschleißende Element (40) in seiner Höhe abgestuft ist und insbesondere eine Nut (46) aufweist.

8. Sauggreifer nach einem der vorhergehenden Ansprüche, **dadurch gekennzeichnet, dass** das verschleißende Element (40) einen Überzug (38) mit einer anderen Farbe aufweist.

9. Sauggreifer nach einem der vorhergehenden Ansprüche, **dadurch gekennzeichnet, dass** das verschleißende Element (40) aus einem anderen oder anders eingefärbten Kunststoff besteht und/oder der Saugkörper (20) ein ZweiKomponenten-Spritzgussteil ist.

10. Sauggreifer nach einem der vorhergehenden Ansprüche, **dadurch gekennzeichnet, dass** der Saugkörper (20) zumindest abschnittsweise ein Element aufweist, dessen Farbe sich im Laufe der Zeit oder mit der Anzahl von Lastwechselbeanspruchungen oder nach Anlegen eines Unterdrucks ändert.

11. Sauggreifer nach Anspruch 10, **dadurch gekennzeichnet, dass** das Element der Saugkörper (20) selbst oder Teil des Saugkörpers (20) ist.

12. Sauggreifer nach einem der vorhergehenden Ansprüche, **dadurch gekennzeichnet, dass** das Mittel einen Kanal (52) aufweist, der in einem verschleißenden Element (40) endet.

13. Sauggreifer nach Anspruch 12, **dadurch gekennzeichnet, dass** der Kanal (52) nach außen offen ist.

14. Sauggreifer nach einem der vorhergehenden Ansprüche, **dadurch gekennzeichnet, dass** im Saugkörper (20) ein RFID-Element (66) integriert ist.

## Claims

1. A suction gripper (10) for picking up workpieces (32) by suction, having an underpressure connector (14), an elastic suction body (20) and a suction body holder (12) wherein, on its side facing the workpiece (32), the suction body (20) has a sealing lip (22) which delimits a suction chamber (26), and the suction chamber (26) is in a flow connection with the underpressure connector (14), and wherein the suction gripper (10) has means for detecting or indicating the wear state of an element (40), which becomes worn in the course of the use of the suction gripper, is subjected to abrasion and is arranged in the area of the sealing lip (22), **characterized in that** an electrically conductive object (28) is provided in the suction body (20), which in particular terminates in the element (40) and is exposed or is broken because of the wear of the element (40).

2. The suction gripper in accordance with claim 1, **characterized in that** a signal emitter is connected to the electrically conductive object (28).

3. The suction gripper in accordance with claim 2, **characterized in that** the signal emitter is of an optical nature, for example a light (36), and/or of an acoustic nature, for example a loudspeaker (64).

4. The suction gripper in accordance with one of the preceding claims, **characterized in that** the object (28) is elastically deformable to a limited degree and breaks or fails after a predetermined number of load changes.

5. The suction gripper in accordance with one of the preceding claims, **characterized in that** a proximity switch (62) is provided in the suction body (20).

6. The suction gripper in accordance with one of the preceding claims, **characterized in that** in the area of the sealing lip (22) height markers (60) are provided at the exterior and/or interior face of the suction body (20).

7. The suction gripper in accordance with one of the preceding claims, **characterized in that** the element (40) becoming worn is stepped in height and has a groove (46) in particular.

8. The suction gripper in accordance with one of the preceding claims, **characterized in that** the element (40) becoming worn has a coating (38) of a different color.

9. The suction gripper in accordance with one of the preceding claims, **characterized in that** the element (40) becoming worn is made of a different, or differently colored plastic material, and/or the suction body (20) is a two-component injection-molded part.

10. The suction gripper in accordance with one of the preceding claims, **characterized in that** the suction body (20) has an element, at least over portions of it, whose color changes over the course of time, or with the number of load change stresses, or following the application of an underpressure.

11. The suction gripper in accordance with claim 10, **characterized in that** the suction body (20) itself, or a portion of the suction body (20), constitutes the element.

12. The suction gripper in accordance with one of the preceding claims, **characterized in that** the means has a channel (52), which terminates in an element (40) being worn.

13. The suction gripper in accordance with claim 12, **characterized in that** the channel (52) is open toward the outside.

14. The suction gripper in accordance with one of the preceding claims, **characterized in that** an RFID element (66) is integrated into the suction body (66).

## Revendications

1. Préhenseur par aspiration (10) pour l'aspiration de pièces (32), comportant un raccordement de dépression (14), un corps d'aspiration élastique (20) et un support de corps d'aspiration (12), moyennant quoi le corps d'aspiration (20) présente sur sa face tournée vers la pièce (32) un joint à lèvre (22) délimitant un espace d'aspiration (26), et l'espace d'aspiration (26) est relié en écoulement au raccordement de dépression (14), et moyennant quoi le préhenseur par aspiration (10) présente des moyens détectant ou indiquant l'état d'usure qui présentent un élément (40) s'usant en lui-même au cours de l'utilisation du préhenseur à aspiration et qui est soumis à une abrasion et disposé dans la zone du joint à lèvre (22), **caractérisé en ce que** dans le corps d'aspiration (20) est prévu un objet électroconducteur (28) qui aboutit en particulier dans l'élément (40) et qui est détaché ou rompu par l'usure de l'élément (40).

2. Préhenseur par aspiration selon la revendication 1, **caractérisé en ce qu'**un émetteur de signaux est raccordé à l'objet électroconducteur (28).

3. Préhenseur par aspiration selon la revendication 2, **caractérisé en ce que** l'émetteur de signaux est de nature optique, par exemple une lampe (36), et/ou de nature acoustique, par exemple un haut-parleur (64).

4. Préhenseur par aspiration selon une des revendications précédentes, **caractérisé en ce que** l'objet (28) est élastiquement déformable sous certaines conditions, et se casse ou s'altère après un nombre prédéterminé de cycles d'effort.

5. Préhenseur par aspiration selon une des revendications précédentes, **caractérisé en ce qu'**un capteur de proximité (62) est prévu dans le corps d'aspiration (20).

6. Préhenseur par aspiration selon une des revendications précédentes, **caractérisé en ce** des repères de hauteurs (60) sont prévus dans la zone du joint à lèvre (22) sur la face intérieure et/ou extérieure du corps d'aspiration (20).

7. Préhenseur par aspiration selon une des revendications précédentes, **caractérisé en ce que** l'élément d'usure (40) est étagé sur sa hauteur et présente en particulier une rainure (46).

8. Préhenseur par aspiration selon une des revendications précédentes, **caractérisé en ce que** l'élément d'usure (40) présente un revêtement (28) d'une autre couleur.

9. Préhenseur par aspiration selon une des revendications précédentes, **caractérisé en ce que** l'élément d'usure (40) est constitué d'une matière plastique différente ou de couleur différente et/ou que le corps d'aspiration est une pièce moulé par injection à deux composants.

10. Préhenseur part aspiration selon une des revendications précédentes, **caractérisé en ce que** le corps d'aspiration (20) présente au moins par sections un élément dont la couleur change au cours du temps ou sous l'effet d'un certain nombre de sollicitations par alternance de charge ou après exposition à une dépression.

11. Préhenseur par aspiration selon la revendication 10, **caractérisé en ce que** l'élément est le corps d'aspiration (20) lui-même ou une pièce du corps d'aspiration (20).

12. Préhenseur par aspiration selon une des revendications précédentes, **caractérisé en ce que** le moyen présente un canal (52) qui aboutit dans un élément d'usure (40).

13. Préhenseur par aspiration selon la revendication 12, **caractérisé en ce que** le canal (52) est ouvert vers l'extérieur.

14. Préhenseur selon une des revendications précédentes, **caractérisé en ce qu'**un élément RFID (66) est intégré dans le corps d'aspiration (20).
